# EUROPEAN PATENT SPECIFICATION

(11) **EP 1 953 175 B1**
(45) Date of publication and mention of the grant of the patent: **21.12.2011**
(21) Application number: 06833081.0
(22) Date of filing: 21.11.2006
(51) Int. Cl.: C08F 8/00, C08F 36/04, C08F 290/04, C09K 3/10, F16J 15/14

(54) **METHOD FOR PRODUCING PHOTOCURABLE LIQUID RESIN AND PHOTOCURABLE LIQUID RESIN PRODUCED BY SUCH METHOD**
VERFAHREN ZUR HERSTELLUNG EINES PHOTOHÄRTBAREN FLÜSSIGEN HARZES UND DANACH HERGESTELLTES PHOTOHÄRTBARES FLÜSSIGES HARZ
PROCEDE DE FABRICATION D'UNE RESINE LIQUIDE PHOTODURCISSABLE ET RESINE LIQUIDE PHOTODURCISSABLE OBTENUE PAR UN TEL PROCEDE

(30) Priority: 25.11.2005 JP 2005340508
(43) Date of publication of application: 06.08.2008
(73) Proprietor: Bridgestone Corporation, Tokyo 104-8340 (JP)
(72) Inventor: TAKIZAWA, Toshiki, Yokohama-shi Kanagawa 244-8510 (JP); OHMORI, Naoyuki, Yokohama-shi Kanagawa 244-8510 (JP)
(74) Representative: Whalley, Kevin
(86) International application number: PCT/JP2006/323235
(87) International publication number: WO 2007/060954

(56) References cited:
- WO-A1-98/55516
- JP-A- 07 033 837
- JP-A- 48 069 891
- JP-A- 48 096 689
- JP-A- 49 052 851
- JP-A- 59 219 302
- JP-A- 59 227 905
- JP-A- 2002 371 101

## Description

### TECHNICAL FIELD

The present invention relates to a method for producing a photocurable liquid resin which is obtained by introducing a photocurable unsaturated hydrocarbon group at the ends of a hydrogenated conjugated diene-based (co)polymer obtained by polymerization using a dilithium initiator and a photocurable liquid resin produced by the method.

### BACKGROUND ART

Recently, various photocurable resins for sealing materials and adhesives have been developed.

For example, in Patent Reference 1, a polyether polyol-based photocurable resin for the surface processing of wooden products such as plywood for wood working, furniture and music instruments is disclosed. However, the polyether polyol-based photocurable resin exhibits great hydrophilicity and moisture permeability and is not suitable for use as a sealing material and a gasket material requiring an excellent barrier property against water vapor.

In Patent Reference 2, a polyester polyol-based photocurable resin composition for coating materials in wood working is disclosed. However, the main chain of the polyester in the polyester polyol is degraded by hydrolysis in the environment of a high temperature and a high humidity, and the polyester polyol is not suitable for use as a sealing material and a gasket material which are exposed to the environment of a high temperature and a high humidity.

As the material exhibiting improved barrier property against water vapor and improved durability in the environment of a high temperature and a high humidity, polybutadiene-based photocurable resin compositions are known. For example, in Patent Reference 3, an adhesive for optical instruments and precision instruments using liquid polybutadiene (meth)acrylate obtained by modifying hydroxy group in a macromolecule, which has macromolecular chains obtained by polymerizing butadiene at the 1,2-bond or hydrogenated macromolecular chains and has hydroxy group in the molecule, with a polymerizable functional group such as acryloyl group and methacryloyl group, is disclosed. However, since the polybutadiene-based photocurable resin having macromolecular chains obtained by polymerizing butadiene at the 1,2-bond or hydrogenated macromolecular chains has a low molecular weight, the molecular weight between crosslinks is small, and the density of crosslink is increased, affecting the rubber elasticity adversely. Therefore, the modulus is great, the elongation is small, the tensile strength is small and the fatigue resistance is poor although the barrier property against water vapor is excellent. The practical application of the above adhesive to gaskets, packings and sealing materials is difficult due to formation of cracks.

Therefore, a photocurable liquid resin based on a hydrogenated conjugated diene-based (co)polymer which has an increased molecular weight by controlling the molecular weight and the molecular weight distribution and exhibits excellent photocuring property and remarkable improvement in the physical properties described above after being cured, has been desired.
[Patent Reference 1] Japanese Patent Application Laid-Open No. Heisei 5(1993)-202163
[Patent Reference 2] Japanese Patent Application Laid-Open No. 2000-219714
[Patent Reference 3] Japanese Patent Application Laid-Open No. 2002-371101
[Patent Reference 3] Japanese Patent Application Publication No. Heisei 1(1989)-53681

Reference is also made to JP 2002 371101 A, WO 98/55516 A1, JP 48 069891 A, JP 48 096689 A, JP 07 033837 A, JP 59 219302 A, JP 49 052851A and JP 59 227905 A

### DISCLOSURE OF THE INVENTION

### [Problems to be Overcome by the Invention]

The present invention has been made to overcome the above problems and has an object of providing a material which exhibits excellent barrier property against water vapor, excellent heat resistance and a hardness suitable for a material having rubber elasticity and is advantageously used as a sealing material and a method for producing the material.

### [Means for Overcoming the Problems]

As the result of intensive studies by the present inventors to achieve the above object, it was found that the object could be achieved by introducing a photocurable unsaturated hydrocarbon group to the ends of a hydrogenated conjugated diene-based (co)polymer obtained by polymerization using a specific initiator. The present invention has been completed based on the knowledge.

The present invention provides:
a method for producing a photocurable liquid resin which comprises:
   (A) a step of producing a conjugated diene-based polymer or a conjugated diene/aromatic vinyl-based copolymer, which has a weight-average molecular weight of 5,000 to 40,000 and a molecular weight distribution of 3.0 or smaller, by polymerizing a conjugated diene-based monomer or a combination of a conjugated diene-based monomer and an aromatic vinyl-based monomer in a saturated hydrocarbon-based solvent using a dilithium initiator;
   (B) a step of producing a conjugated diene-based polymer polyol or a conjugated diene/aromatic vinyl-based copolymer polyol by bringing the conjugated diene-based polymer or the conjugated diene/ aromatic vinyl-based copolymer into reaction with an alkylene oxide;
   (C) a step of producing a hydrogenated conjugated diene-based polymer polyol or a hydrogenated conjugated diene/aromatic vinyl-based copolymer polyol by hydrogenating the conjugated diene-based polymer polyol or the conjugated diene/aromatic vinyl-based copolymer polyol; and
   (D) a step of bringing the hydrogenated conjugated diene-based polymer polyol or the hydrogenated conjugated diene/ aromatic vinyl-based copolymer polyol into reaction with a compound having a photocurable unsaturated hydrocarbon group;
a photocurable liquid resin which is produced in accordance with the method described above;
a photocurable composition which comprises the photocurable liquid resin described above and has a JIS-A hardness of 55 or smaller;
a sealing material for electronic products obtained by curing the photocurable composition described above; and
a gasket material for electronic products obtained by curing the photocurable composition described above.

### THE EFFECT OF THE INVENTION

In accordance with the present invention, a material which exhibits excellent barrier property against water vapor, excellent heat resistance and a hardness suitable for a material having rubber elasticity and is advantageously used as a sealing material and a method for producing the material can be provided.

The sealing material of the present invention is advantageously used as a gasket material and, in particular, a gasket material for hard disk drives. The composition of the present invention can be coated or formed in accordance with any desired method to obtain a material advantageously used as a material for holding members in hard disk drives.

### THE MOST PREFERRED EMBODIMENT TO CARRY OUT THE INVENTION

In the method of the present invention, as the first step, a conjugated diene-based monomer or a combination of a conjugated diene-based monomer and an aromatic vinyl-based monomer is polymerized in a saturated hydrocarbon-based solvent using a dilithium initiator, and a conjugated diene-based polymer or a conjugated diene/aromatic vinyl-based copolymer (occasionally referred to as a (co)polymer of the present invention, hereinafter) is produced. Since the above polymerization is the living anionic polymerization, the polymerization can be conducted with control of the molecular weight and the molecular weight distribution. As for the molecular weight, a polymer having a prescribed molecular weight can be obtained by controlling the relative amounts of the dilithium initiator and the above monomer in the polymerization. When a polymer having a weight-average molecular weight of 5,000 or greater is obtained, a polymer having a narrow molecular weight distribution such as a molecular weight distribution of 2 or smaller can be easily obtained. Where desired, the anionic polymerization may be conducted in the presence of a randomizer.

As the second step, a conjugated diene-based polymer polyol or a conjugated diene/aromatic vinyl-based copolymer polyol, which has hydroxy group at both ends, (occasionally referred to as a (co)polymer polyol of the present invention, hereinafter) can be obtained by bringing the ends of the (co)polymer of the present invention which is a living anion into reaction with the equivalent amount of an alkylene oxide.

As the third step, a hydrogenated conjugated diene-based polymer polyol or a hydrogenated conjugated diene/aromatic vinyl-based copolymer polyol, which has no or few unsaturated bonds in the main chain, (occasionally referred to as a hydrogenated (co)polymer polyol of the present invention, hereinafter) can be obtained by bringing the (co)polymer polyol of the present invention having double bonds in the main chain into the reaction of addition with hydrogen (referred to as the hydrogenation, hereinafter). In the above descriptions, "a (co)polymer" means "a polymer" or "a copolymer".

As the fourth step, a photocurable liquid resin into which a photocurable unsaturated hydrocarbon group is introduced can be obtained by bringing the hydrogenated (co)polymer polyol of the present invention obtained above into reaction with a compound having a photocurable unsaturated hydrocarbon group.

Examples of the conjugated diene-based monomer include 1,3-butadiene, isoprene, 1,3-pentadiene, 2,3-dimethylbutadiene, 2-phenyl-1,3-butadiene and 1,3-hexadiene. These monomers may be used singly or in combination of two or more. Among these monomers, 1,3-butadiene and isoprene are preferable from the standpoint of surely obtaining the rubber elasticity after being cured.

As the aromatic vinyl-based monomer, styrene, α-methylstyrene and para-methylstyrene are preferable from the standpoint of the physical properties of the rubber obtained after being cured. The monomers may be used singly or in combination of two or more.

As the dilithium initiator, conventional dilithium initiators can be used without restrictions. For example, in Patent Reference 4, a method for producing a dilithium initiator by the reaction of a monolithium compound with an aromatic hydrocarbon disubstituted with a vinyl group or an alkenyl group in the presence of a tertiary amine is described.

Examples of the monolithium compound used in the production of the dilithium initiator include ethyllithium, n-propyllithium, isopropyllithium, n-butyllithium, sec-butyllithium, tert-butyllithium, tert-octyllithium, n-decyllithium, phenyllithium, 2-naphthyllithium, 2-butylphenyllithium, 4-phenylbutyllithium, cyclohexyllithium and cyclopentyllithium. Among these monolithium compounds, sec-butyllithium is preferable.

Examples of the tertiary amine used in the production of the dilithium initiator include lower aliphatic amines such as trimethylamine and triethylamine and N,N-diphenylmethylamine. Among the above tertiary amines, triethylamine is preferable.

Examples of the aromatic hydrocarbon disubstituted with a vinyl group or an alkenyl group include 1,3-(diisopropenyl)benzene, 1,4-(diisopropenyl)benzene, 1,3-bis(1-ethylethenyl)benzene and 1,4-bis(1-ethylethenyl)benzene.

As the solvent used for the preparation of the dilithium initiator and the production of the (co)polymer, it is sufficient that an organic solvent inert to the reaction is used. A hydrocarbon solvent such as an aliphatic hydrocarbon compound, an alicyclic hydrocarbon compound and an aromatic hydrocarbon compounds is used. For example, at least one solvent selected from n-butane, 1-butane, n-pentane, 1-pentane, cis-2-butene, trans-2-butene, 1-butene, n-hexane, n-heptane, n-octane, 1-octane, methylcyclopentane, cyclopentane, cyclohexane, 1-hexene, 2-hexene, 1-pentene, 2-pentene, benzene, toluene, xylene and ethylbenzene is used. Among these solvents, in general, n-hexane and cyclohexane are used.

Examples of the alkylene oxide used for forming the polyol having hydroxy groups at both ends by the reaction with the ends of the (co)polymer of the present invention described above, which is a living anion, include ethylene oxide, propylene oxide and butylene oxide. It is preferable that the reaction for forming the polyol is conducted immediately after the polymerization.

When the weight-average molecular weight of the (co)polymer polyol of the present invention obtained by the above reaction for forming the polyol is 5,000 or greater, the obtained material is advantageous as the rubber material since the molecular weight between crosslinks can be increased and a smaller modulus and a greater elongation can be obtained after the photocuring reaction. When the weight-average molecular weight is 40,000 or smaller, the cost is decreased since the viscosity of the polymer solution during the polymerization using the dilithium catalyst is not excessively great and it is not necessary that the concentration of the solid components is decreased in the polymerization process. Therefore, it is preferable that the weight-average molecular weight is in the range of 5,000 to 40,000.

When the molecular weight distribution is 3.0 or smaller, various effects due to low molecular weight components and high molecular weight components can be suppressed. In particular, since the viscosity is greatly affected by the molecular weight, a slight change in the molecular weight causes fluctuations in the viscosity. Since the (co)polymer having a narrow molecular weight distribution can be synthesized in accordance with the present invention, copolymers having the same molecular weight can be obtained with excellent reproducibility, and the effect of stabilizing the viscosity can be expected. Application of a liquid material such as the liquid resin of the present invention is frequently conducted using a dispenser. In this case, fluctuations in the viscosity of the material cause fluctuations in the dimension of a sealing material obtained after the application. Therefore, stabilization of the viscosity is important, and it is preferable that the molecular weight distribution is 3.0 or smaller.

The hydrogenation in the method of the present invention is conducted by adding hydrogen to the (co)polymer of the present invention described above in an organic solvent under pressure of hydrogen in the presence of a hydrogenation catalyst. As the hydrogenation catalyst used in the method of the present invention, a heterogeneous catalyst or a homogenous catalysts can be used. Examples of the heterogeneous catalyst include palladium-carbon-based catalysts, reduced nickel-based catalysts and rhodium-based catalysts. Examples of the homogenous catalyst include combinations of an organonickel compound such as nickel naphthenate and nickel octanoate or an organocobalt compound such as cobalt naphthenate and cobalt octanate with an organoaluminum compound such as triethylaluminum and triisobutylaluminum or an organolithium compound such as n-butyllithium and sec-butyllithium. As the cocatalyst, an ether compound such as tetrahydrofuran, ethylene glycol dimethyl ether and diethylene glycol dimethyl ether may be used. Examples of other methods of hydrogenation include a method in which the (co)polymer of the present invention before being hydrogenated is hydrogenated under an added pressure of hydrogen of 1 to 100 atm in the presence of a hydrogenation catalyst comprising a dicyclopentadienyl-titanium halide, a nickel salt of an organic carboxylic acid or a combination of a nickel salt of an organic carboxylic acid and an organometallic compound of a metal selected from metals of Groups I to III of the Periodic Table, a metal catalyst comprising nickel, platinum, palladium, ruthenium, rhenium or rhodium supported on carbon, silica or diatomaceous earth or a catalyst such as complexes of nickel, rhodium and ruthenium; or hydrogenated in the presence of lithium aluminum hydride or p-toluenesulfonyl hydrazide, in the presence of a hydrogen storage alloy such as Zr-Ti-Fe-V-Cr alloys, Zr-Ti-Nb-Fe-V-Cr alloys and LaNi₅ alloys or under an added pressure of hydrogen of 1 to 100 atm; and a method in which the (co)polymer of the present invention before being hydrogenated is hydrogenated under an added pressure of hydrogen of 1 to 100 atm in the presence of a hydrogenation catalyst obtained by mixing an n-hexane solution of di-p-tolylbis(1-cylopentadienyl)titanium with an n-hexane solution of n-butyllithium under hydrogen.

Among the above hydrogenation catalysts, the Ziegler-based hydrogenation catalysts comprising a combination of a transition metal compound and an alkylaluminum compound and the palladium-carbon-based hydrogenation catalysts are preferable.

Examples of the transition metal compound include tris(acetyl-acetonato)cobalt, bis(acetylacetonato)nickel, tris(acetylacetonato)iron, tris(acetylacetonato)chromium, tris(acetylacetonato)manganese, bis-(acetylacetonato)manganese, tris(acetylacetonato)ruthenium, bis(acetyl-acetonato)cobalt, bis(cyclopentadienyl)dichlorotitanium, bis(cyclopentadienyl)dichlorozirconium, bis(triphenylphosphine)cobalt dichloride, bis(2-hexanoato)nickel, bis(2-hexanoato)cobalt, titanium tetraisopropoxide and titanium tetraethoxide. Among these transition metal compounds, bis(acetylacetonato)nickel and tris(acetylacetonato)cobalt are preferable due to the great activity of hydrogenation.

Examples of the alkylaluminum compound used for the Ziegler-based catalyst include trimethylaluminum, triethylaluminum, triisopropylaluminum, triisobutylaluminum, tri-n-butylaluminum, dimethylaluminum chloride, diethylaluminum chloride, diisobutylaluminum chloride, methylaluminum dichloride, ethylaluminum dichloride, isobutylaluminum dichloride, diethylaluminum hydride, diisobutylaluminum hydride and ethylaluminum sesquichloride. Among these alkylaluminum compounds, triisobutylaluminum, triethylaluminum and diisobutylaluminum hydride are preferable from the standpoint of the activity of hydrogenation, and triisobutylaluminum is most preferable.

The form of the use of the Ziegler-based hydrogenation catalyst in the present invention is not particularly limited. It is preferable that a catalyst solution is prepared in advance by reacting the transition metal compound and the alkylaluminum compound with each other, and the prepared catalyst solution is added to the polymer solution. It is preferable that the amount of the alkylaluminum used for the above preparation is 0.2 to 5 moles per 1 mole of the transition metal compound. The temperature for the preparation of the catalyst solution is in the range of -40 to 100°C and preferably in the range of 0 to 80°C, and the time for the reaction is in the range of 1 minute to 3 hours.

The hydrogenation is conducted at a temperature, in general, in the range of 50 to 180°C and preferably in the range of 70 to 150°C, under a hydrogen pressure, in general, in the range of 5 to 100 atm (5,066.25 to 101,325 hPa) and preferably in the range of 10 to 50 atom (10,132.5 to 50,662.5 hPa). A temperature of hydrogenation lower than 50°C or a hydrogen pressure lower than 5 atm is not preferable due to the decrease in the catalyst activity. A temperature of hydrogenation exceeding 180°C is not preferable since deactivation of the catalyst and side reactions tend to take place. Since the Ziegler-based catalyst is, in general, a catalyst exhibiting remarkably great activity of hydrogenation, a hydrogen pressure exceeding 100 atm (101,325 hPa) is not necessary and not preferable due to excessive load on the apparatus.

In the introduction of a photocurable unsaturated hydrocarbon group to the ends of the hydrogenated (co)polymer polyol by bringing the hydrogenated (co)polymer polyol of the present invention into reaction with a compound having a photocurable unsaturated hydrocarbon group, it is preferable that the photocurable unsaturated hydrocarbon group is acryloyl group or methacryloyl group. As the compound having a photocurable unsaturated hydrocarbon group, acryloyl isocyanates and methacryloyl isocyanates are preferable. (Meth)acryloyl group is introduced into the hydrogenated (co)polymer polyol described above by the reaction with the above compound. Examples of the acryloyl isocyanate include 2-acryloyloxyethyl isocyanate. Examples of the methacryloyl isocyanate include 2-methacryloyloxyethyl isocyanate.

The photocurable liquid resin obtained in accordance with the method of the present invention is, in general, used in the form of a photocurable composition. It is preferable that the photocurable composition comprises the photocurable liquid resin in an amount of 20% by mass or more and more preferably 30% by mass or more based on the entire amount of the photocurable composition. As the components of the composition other than the photocurable liquid resin, (meth)acrylic acid ester monomers, photo-radical polymerization initiators, inorganic fillers and/or organic thickeners are preferably used.

The (meth)acrylic acid ester monomer not only decreases the viscosity of the photocurable composition before being cured but also improves physical properties after being cured. In other words, an improvement in the adhesive strength, a decrease in the hardness and increases in the elongation at break (Eb) and the strength at break (Tb) can be achieved. It is preferable that the (meth)acrylic acid ester monomer has a molecular weight smaller than 1,000 and more preferably in the range of 150 to 600. Examples of the (meth)acrylic acid ester monomer include cyclohexyl (meth)acrylate, dicyclopentanyl (meth)-acrylate, dicyclopentenyl (meth)acrylate, dicyclopentenyloxyethyl (meth)acrylate, diethylene glycol monoethyl ether (meth)acrylate, dimethylaminoethyl (meth)acrylate, dimethyloldicyclopentane di(meth)-acrylate, dipropylene glycol (meth)acrylate, ethoxydiethylene glycol (meth)acrylate, phenyl (meth)acrylate modified with ethoxy group, ethyl (meth)acrylate, isoamyl (meth)acrylate, isobornyl (meth)acrylate, isobutyl (meth)acrylate, isodecyl (meth)acrylate, isooctyl (meth)acrylate, isostearyl (meth)acrylate, isomyristyl (meth)acrylate, lauroxypolyethylene glycol (meth)acrylate, lauryl (meth)acrylate, methoxydipropylene glycol (meth)acrylate, methoxytripropylene glycol (meth)acrylate, methoxy-polyethylene glycol (meth)acrylate and methoxytriethylene glycol acrylate.

"A (meth)acrylate" means "an acrylate" or "a methacrylate".

Among the above compounds, dicyclopentanyl acrylate, dicyclopentenyl acrylate and isobornyl acrylate are preferable in the present invention.

When the sum of the amounts of the photocurable liquid resin and the (meth)acrylic acid ester monomer is 100 parts by mass, it is preferable that the amount of the photocurable liquid resin is 30 to 100 parts by mass and the amount of the (meth)acrylic acid ester monomer is 70 to 0 parts by mass, and it is more preferable that the amount of the photocurable liquid resin is 40 to 90 parts by mass and the amount of the (meth)acrylic acid ester monomer is 60 to 10 parts by mass. When the amount of the (meth)acrylic acid ester monomer is 10 parts by mass or more, the effect of decreasing the viscosity of the photocurable composition can be exhibited. Extrusion and discharge are facilitated, and forming into a sealing material can be conducted more easily. When the amount of the (meth)acrylic acid ester monomer is 60 parts by mass or less, the viscosity of the composition is not excessively small, and flowing down of the sealing material immediately after being formed can be suppressed. Moreover, the desired adhesive strength and modulus of the sealing material can be surely obtained after the curing, and adverse effects on the tight sealing can be prevented.

Examples of the photo-radical polymerization initiator include initiators of the intramolecular scission type and initiators of the hydrogen abstraction type. Examples of the initiator of the intramolecular scission type include benzoin derivatives, benzylketals [such as IRGACURE 651, a trade name, manufactured by CIBA SPECIALTY CHEMICALS Co., Ltd.], α-hydroxyacetophenones [such as DAROCUR 1173, IRGACURE 184 and IRGACURE 127, trade names, manufactured by CIBA SPECIALTY CHEMICALS Co., Ltd.], α-aminoacetophenones [such as IRGACURE 907 and IRGACURE 369, trade names, manufactured by CIBA SPECIALTY CHEMICALS Co., Ltd.], combinations of α-aminoacetophenones and thioxanthones (such as isopropylthioxanthone and diethylthioxanthone) and acylphosphine oxides [such as IRGACURE 819, a trade name, manufactured by CIBA SPECIALTY CHEMICALS Co., Ltd.]. Examples of the initiator of the hydrogen abstraction type include combinations of benzophenones and amines and combinations of thioxanthones and amines. The initiator of the intramolecular scission type and the initiator of the hydrogen abstraction type may be used in combination. Among the above initiators, α-hydroxyacetophenones modified as oligomers and benzophenones modified with acrylates are preferable. Specific examples of the preferable initiator include oligo[2-hydroxy-2-methyl-1-[4-(1-methylvinyl)phenyl]propanone] [such as ESACURE KIP150, a trade name, manufactured by LAMBERTI S.p.A.], benzophenones modified with acrylate [such as EBECRYL P136, a trade name, manufactured by DAICEL UCB Co., Ltd.] and imide acrylates.

As the photo-radical polymerization initiator, initiators other than the compounds described above such as 1-[4-(2-hydroxyethoxy)phenyl]-2-methyl-1-propan-1-one, 1-hydroxycyclohexyl phenyl ketone, mixtures of 1-hydroxycyclohexyl phenyl ketone and benzophenone, 2,2-dimethoxy-1,2-diphenylethan-1-one, 2,4,6-trimethylbenzoylphenylphosphine oxide, 2,4,6-trimethylbenzoylphenylphenylethoxyphosphine oxide, 2-benzyl-2-dimethylamino-1-(4-morpholinophenyl)butanone, 1,2-hydroxy-2-methyl-1-phenylpropan-1-one, 2-methyl-1-[(4-methylthio)phenyl]-2-morpholino-propan-1-one, benzoyl methyl ether, benzoyl ethyl ether, benzoyl butyl ether, benzoyl isopropyl ether, bis(2,4,6-trimethylbenzoyl)phenylphosphine oxide, 2-hydroxy-2-methyl-[4-(1-methylvinyl)phenyl]propanol oligomers, mixtures of 2-hydroxy-2-methyl-[4-(1-methylvinyl)phenyl]-propanol oligomers and 2-hydroxy-2-methyl-1-phenyl-1-propanone, isopropylthioxanthone, methyl o-benzoylbenzoate and [4-(methylphenylthio)phenyl]phenylmethane can also be used.

It is preferable that the amount of the photo-radical polymerization initiator used in the photocurable composition of the present invention is 0.1 to 6 parts by mass, more preferably 0.5 to 4 parts by mass and most preferably 1 to 3 parts by mass based on 100 parts by mass of the sum of the amounts of the photocurable liquid resin and the (meth)acrylic acid ester monomer.

When the photocurable composition comprises an inorganic filler and/or an organic thickener, the composition is provided with thixotropy, and the forming property of the composition can be improved.

Examples of the inorganic filler include silica (SiO₂), alumina, titania and clay minerals. Among the inorganic fillers, silica powder, silica powder subjected to the hydrophobic treatment and mixtures of these fillers are preferable. Specific examples of the inorganic filler include silica fine powder formed into the fine powder form in accordance with the dry process [such as AEROSIL 300, a trade name, manufactured by NIPPON AEROSIL Co;. Ltd.], fine powder obtained by modifying the above silica fine powder with trimethyldisilazane [such as AEROSIL RX300, a trade name, manufactured by NIPPON AEROSIL Co;. Ltd.] and fine powder obtained by modifying the above silica fine powder with polydimethylsiloxane [such as AEROSIL RY300, a trade name, manufactured by NIPPON AEROSIL Co;. Ltd.].

It is preferable that the average diameter of the inorganic filler is 5 to 50 µm and more preferably 5 to 12 µm from the standpoint of the thickening property and the thixotropy.

It is preferable that the amount of the inorganic filler in the photocurable composition of the present invention is 0.1 to 10 parts by mass, more preferably 0.5 to 7 parts by mass and most preferably 1 to 5 parts by mass based on 100 parts by mass of the sum of the amounts of the photocurable liquid resin and the (meth)acrylic acid ester monomer used for the photocurable composition of the present invention.

As the organic thickener, hydrogenated castor oil, amide wax and mixtures of hydrogenated oil and amide wax are preferable. Specific examples of the organic thickener include hydrogenated castor oils which are hydrogenation products of castor oil containing a non-drying oil of ricinolic acid as the main component [such as ADVITROL 100, a trade name, manufactured by SUDCHEMIE CATALYST Co., Ltd.; and DISPALON 305, a trade name, manufactured by KUSUMOTO KASEI Co., Ltd.] and higher amide waxes which are compounds having amide bond [such as [DISPALON 6500, a trade name, manufactured by KUSUMOTO KASEI Co., Ltd.]

It is preferable that the amount of the organic thickener in the photocurable composition of the present invention is 0.1 to 10 parts by mass, more preferably 0.5 to 7 parts by mass and most preferably 1 to 5 parts by mass based on 100 parts by mass of the sum of the amounts of the photocurable liquid resin and the (meth)acrylic acid ester monomer.

In the photocurable composition of the present invention, oligomers having (meth)acrylate at the end can be used in combination with or in place of the (meth)acrylic acid ester monomer described above. The viscosity of the photocurable composition can be adjusted by using the oligomer having (meth)acrylate at the end. With respect to the physical properties, a decrease in the hardness and increases in the elongation at break (Eb) and the strength at break (Tb) can be achieved. "An oligomer having (meth)acrylate at the end" means an oligomer having acryloyl group or methacryloyl group at one or both ends. As the oligomer having (meth)acrylate at the end, hydrocarbon-based oligomers, i.e., hydrogenated oligomers and hydrogenated oligomers having (meth)acrylate at the end, are preferable from the standpoint of the moisture permeability, the weatherability and the heat resistance. It is preferable that the weight-average molecular weight of the oligomer having (meth)acrylate at the end is in the range of 5,000 to 40,000. When the weight-average molecular weight is in this range, advantages are exhibited in that the oligomer can be easily handled as a liquid material and the product obtained after being cured has a small hardness.

Examples of the oligomer having (meth)acrylate at the end include polyester (meth)acrylate-based oligomers, epoxy (meth)acrylate-based oligomers, urethane (meth)acrylate-based oligomers and polyol (meth)acrylate-based oligomers. The polyester (meth)acrylate-based oligomer can be obtained, for example, by obtaining a polyester oligomer having hydroxy groups at both ends by condensation of a polybasic carboxylic acid and a polyhydric alcohol, followed by esterification of the hydroxy groups at the ends of the obtained oligomer with (meth)acrylic acid; or by obtaining an oligomer by addition of an alkylene oxide to a polybasic carboxylic acid, followed by esterification of hydroxy group formed at the ends of the obtained oligomer with (meth)acrylic acid. The epoxy (meth)acrylate can be obtained, for example, by esterification of an epoxy resin of the bisphenol type or an epoxy resin of the novolak type having a relatively low molecular weight by the reaction of the oxirane ring in the resin with (meth)acrylic acid. The esterification can be conducted also by modification with an isocyanate, followed by esterification of hydroxy group at the ends with acrylic acid. The polyol (meth)acrylate-based oligomer can be obtained by esterification of hydroxy group in a polyether polyol with (meth)acrylic acid. The urethane (meth)acrylate-based oligomer can be obtained, for example, by obtaining a polyurethane oligomer by the reaction of a polyether polyol or a polyester polyol with a polyisocyanate, followed by esterification of the obtained polyurethane oligomer with (meth)acrylic acid.

It is preferable that the amount of the oligomer having (meth)acrylate at the end used in the photocurable composition of the present invention is 30 to 100 parts by mass and more preferably 40 to 90 parts by mass based on 100 parts by mass of the sum of the amounts of the photocurable liquid resin and the (meth)acrylic acid ester monomer. Where desired, the (meth)acrylic acid ester monomer and the oligomer having (meth)acrylate at the end may be exchanged.

The photocurable composition of the present invention may further comprise stabilizers. Examples of the stabilizer include phenol-based antioxidants such as trietheylene glycol bis[3-(3-t-butyl-4-hydroxy-5-methylphenyl)propionate] [such as IRGANOX 245, a trade name, manufactured by CIBA SPECIALTY CHEMICALS Co., Ltd. and ADEKASTAB AO-70, a trade name, manufactured by ASAHI DENKA KOGYO Co., Ltd.] and 3,9-bis{2-[3-(3-t-butyl-4-hydroxy-5-methylphenyl)-propionyloxy]-1,1-dimethylethyl}-2,4,8,10-tetraoxaspiro[5.5]undecane [such as ADEKASTAB AO-80, a trade name, manufactured by ASAHI DENKA KOGYO Co., Ltd.].

It is preferable that the amount of the stabilizer used in the photocurable composition of the present invention is 0.1 to 5 parts by mass, preferably 0.5 to 3 parts by mass and most preferably 0.5 to 2 parts by mass based on 100 parts by mass of the sum of the amounts of the photocurable liquid resin and the (meth)acrylic acid ester monomer.

The photocurable composition of the present invention may further comprise additives, examples of which include various tackifiers for improving adhesion such as terpene resins, terpene phenol resins, coumarone resins, coumarone indene resins, petroleum-based hydrocarbons and rosin derivatives and coloring agents such as titanium black as long as the effect of the present invention is not adversely affected.

A cured product can be obtained by curing the photocurable composition of the present invention by the reaction under irradiation with an active energy ray. It is preferable that the JIS-A hardness of the cured product measured by a durometer of the type A is 55 or smaller so that the sufficient sealing property can be obtained. From the same standpoint, the hardness is more preferably 10 to 55, still more preferably 20 to 55 and most preferably 25 to 55.

It is preferable that the cured product has a moisture permeability of 40 g/m²·24 hr or smaller so that the function as a sealing material and a gasket can be sufficiently exhibited. It is more preferable that the moisture permeability is 15 g/m²·24 hr or smaller.

The activating energy ray used for curing the photocurable composition of the present invention by the reaction means ultraviolet light and an ionizing radiation such as electron ray, α-ray, β-ray and γ-ray. In the present invention, ultraviolet light is preferable. Examples of the source of ultraviolet light include xenon lamps, low voltage mercury lamps, high voltage mercury lamps, metal halide lamps and excimer lamps of the microwave type. As the atmosphere for the irradiation with ultraviolet light, an atmosphere of an inert gas such as nitrogen gas and carbon dioxide gas and an atmosphere having a decreased oxygen concentration are preferable. The curing can be sufficiently conducted also in the atmosphere of the ordinary air. The temperature of the atmosphere of the irradiation is, in general, 10 to 200°C.

The properties of the photo-cured resin can be stabilized by the further irradiation with the active energy ray or by the treatment by heating after the curing.

The method for producing the photocurable composition of the present invention is not particularly limited, and a conventional method can be applied. The photocurable composition can be produced, for example, by mixing the components and additive components which are used where desired using a mixer which allows adjustment of the temperature such as a single screw extruder, a twin screw extruder, planetary mixer, a twin screw mixer and a mixer of the high shear type.

The gasket material and other sealing materials of the present invention can be produced by applying the photocurable composition obtained as described above to an adherend, followed by curing the photocurable composition by irradiation with the energy ray. As the adherend, substrates made of a metal are preferable from the standpoint of the workability although substrates made of a hard resin may be used. The metal is not particularly limited. A metal plate can be suitably selected from cold-rolled steel plates, zinc-plated steel plates, aluminum/zinc alloy-plated steel plates, stainless steel plates, aluminum plates, aluminum alloy plates, magnesium plates and magnesium alloy plates. A plate produced by injection molding of magnesium can also be used. A metal treated by the electrodeless nickel plating is preferable from the standpoint of corrosion resistance. As the method for the treatment by the electrodeless nickel plating, conventional methods which have been applied to metal raw materials can be used. Examples of the method include a method in which a metal plate is dipped into an electrodeless nickel plating bath containing nickel sulfate, sodium hypophosphite, lactic acid and propionic acid in suitable relative amounts and having a pH of about 4.0 to 5.0 at a temperature of about 85 to 95°C.

Examples of the application of the sealing material include gaskets for HDD, seals for ink tanks and seals for liquid crystals. The thickness of the sealing material can be suitably selected in accordance with the application and is, in general, about 0.1 to 2.0 mm.

The application of the photocurable composition to the substrate can be conducted in accordance with a desired method using an application fluid adjusted at a desired temperature where necessary and at a desired constant viscosity. Examples of the application method include the gravure coating method, the roll coating method, the spin coating method, the reverse coating method, the bar coating method, the screen coating method, the blade coating method, the air knife coating method, the dipping method, the dispensing method and the ink-jet method. After the above photocurable composition is applied and formed, the applied layer is cured by irradiation with the activating energy ray, and a sealing material can be obtained.

In the sealing material, it is preferable that the sectional shape of the sealing material is such that the height of the sealing layer is 0.2 to 2.0 and more preferably 0.3 to 2.0 when the width of the sealing layer is expressed as 1 so that the space at the inside of an electronic instrument such as HDD and a printing machine is efficiently used while the excellent sealing property is surely maintained. When the sufficient height cannot be obtained by a single applied layer, the application may be conducted a plurality of times. When the application is conducted a plurality of time, the curing may be conducted at each applied layer step by irradiation with the energy ray.

### EXAMPLES

The present invention will be described more specifically with reference to examples in the following. However, the present invention is not limited to the examples.

The weight-average molecular weight, the moisture permeability, the hardness and the heat resistance were measured in accordance with the following methods.

### (1) Weight-average molecular weight

The weight-average molecular weight was measured in accordance with the gel permeation chromatography (GPC) and expressed as the value of the corresponding polystyrene.

### (2) Moisture permeability

The moisture permeability was measured in accordance with the method of Japanese Industrial Standard (JIS) Z0208 using the moisture permeation cup of the method A described in JIS L1099 at 40°C under a relative humidity of 90%. As the test piece, a sheet having a thickness of 0.86 mm was used.

### (3) Hardness

The hardness of a cured product was measured using a durometer of the type A in accordance with the method of JIS K6253. As the test piece, a test piece and having a thickness of about 6 mm which was obtained by laminating seven sheets having a thickness of about 0.9 mm was used.

### (4) Heat resistance

A test piece for the tensile test of JIS No. 3 was left standing at 90°C under 70% RH for 1,000 hours. The decrease in the tensile strength was expressed by % based on the original value (before being left standing). The smaller the value, the better the heat resistance.

### Example of Preparation of Polymer 1

After 1 mole of 1,3-(diisopropenyl)benzene was added into sufficiently dehydrated and purified cyclohexane, 2 moles of triethylamine and 2 moles of sec-butyllithium were successively added. The resultant mixture was stirred at 50°C for 2 hours, and a dilithium polymerization initiator was prepared.

Into a 7 liter polymerization reactor purged with argon in advance, 1.35 kg of dehydrated and purified cyclohexane, 2.67 kg of a 22.9% by mass hexane solution of 1,3-butadiene monomer and 209.4 ml of a 1.6 moles/liter hexane solution of 2,2-bis(tetrahydrofuryl)propane (OOPS) were placed, and the polymerization was initiated by adding 223.5 ml of a 0.5 moles/liter solution of the dilithium polymerization initiator.

The polymerization was conducted for 1.5 hours while the temperature of the polymerization reactor was being elevated to 50°C. After 220.4 ml of a 1 mole/liter cyclohexane solution of ethylene oxide was added, the resultant mixture was stirred for 2 hours and, then, 50 ml of isopropyl alcohol was added. The formed polymer was separated from the hexane solution by precipitation into isopropyl alcohol and sufficiently dried, and Polymer polyol A was obtained. Polymer polyol A was polybutadiene having OH group at both ends and had a weight-average molecular weight of 7,500 and a molecular weight distribution of 1.25.

### Example of Preparation of Polymer 2

Into a 7 liter polymerization reactor purged with argon in advance, 1.50 kg of dehydrated and purified cyclohexane, 2.00 kg of a 22.9% by mass hexane solution of 1,3-butadiene monomer, 0.765 kg of a 20.0% by mass cyclohexane solution of styrene monomer and 209.4 ml of a 1.6 moles/liter hexane solution of OOPS were placed, and the polymerization was initiated by adding 223.5 ml of a 0.5 moles/liter solution of the dilithium polymerization initiator.

The polymerization was conducted for 1.5 hours while the temperature of the polymerization reactor was being elevated to 50°C. After 220.4 ml of a 1 mole/liter cyclohexane solution of ethylene oxide was added, the resultant mixture was stirred for 2 hours and, then; 50 ml of isopropyl alcohol was added. The formed polymer was separated from the hexane solution by precipitation into isopropyl alcohol and sufficiently dried, and Polymer polyol B was obtained. Polymer polyol B was a styrene-butadiene copolymer having OH group at both ends, contained 25% by mass of the styrene unit and had a weight-average molecular weight of 7,100 and a molecular weight distribution of 1.25.

### Example of Preparation of Polymer 3

Into a 7 liter polymerization reactor purged with argon in advance, 1.90 kg of dehydrated and purified cyclohexane, 2.00 kg of a 22.9% by mass hexane solution of 1,3-butadiene monomer, 0.765 kg of a 20.0% by mass cyclohexane solution of styrene monomer and 130.4 ml of a 1.6 moles/liter hexane solution of OOPS were placed, and the polymerization was initiated by adding 108.0 ml of a 0.5 moles/liter solution of the dilithium polymerization initiator.

The polymerization was conducted for 1.5 hours while the temperature of the polymerization reactor was being elevated to 50°C. After 108.0 ml of a 1 mole/liter cyclohexane solution of ethylene oxide was added, the resultant mixture was stirred for 2 hours and, then, 50 ml of isopropyl alcohol was added. The formed polymer was separated from the hexane solution by precipitation into isopropyl alcohol and sufficiently dried, and Polymer polyol C was obtained. Polymer polyol C was a styrene-butadiene copolymer having OH group at both ends, contained 25% by mass of the styrene unit and had a weight-average molecular weight of 14,500 and a molecular weight distribution of 1.20.

### Example of Preparation of Polymer 4

Into a 7 liter polymerization reactor purged with argon in advance, 2.50 kg of dehydrated and purified cyclohexane, 2.00 kg of a 22.9% by mass hexane solution of 1,3-butadiene monomer, 0.765 kg of a 20.0% by mass cyclohexane solution of styrene monomer and 130.4 ml of a 1.6 moles/liter hexane solution of OOPS were placed, and the polymerization was initiated by adding 54.0 ml of a 0.5 moles/liter solution of the dilithium polymerization initiator.

The polymerization was conducted for 1.5 hours while the temperature of the polymerization reactor was being elevated to 50°C. After 53.8 ml of a 1 mole/liter cyclohexane solution of ethylene oxide was added, the resultant mixture was stirred for 2 hours and, then, 50 ml of isopropyl alcohol was added. The formed polymer was separated from the hexane solution by precipitation into isopropyl alcohol and sufficiently dried, and Polymer polyol D was obtained. Polymer polyol D was a styrene-butadiene copolymer having OH group at both ends, contained 25% by mass of the styrene unit and had a weight-average molecular weight of 25,300 and a molecular weight distribution of 1.86.

### Examples 1 to 5 and Comparative Example 1

After 120 g of one of Polymer polyols A, B, C and D was dissolved into 1 liter of sufficiently dehydrated and purified hexane, a solution of a catalyst which was prepared from nickel naphthenate, triethylaluminum and butadiene in relative amounts by mole of 1:3:3 in another vessel was added in an amount such that the amount of nickel was 1 mole per 1,000 moles of the butadiene unit in the copolymer solution. The hydrogenation was conducted in a tightly closed reactor by adding 27,580 hPa (400 psi) of hydrogen at 110°C for 4 hours. Then, the catalyst residues were removed by extraction with a 3 N hydrochloric acid and further removed by centrifugal separation. The hydrogenated polymer polyol was separated by precipitation into isopropyl alcohol and sufficiently dried.

The hydrogenated polymer polyol which had been sufficiently dried in an amount of 100 g was dissolved into cyclohexane. While the obtained solution was kept at 40°C and sufficiently stirred, 2-acryloyloxyethyl isocyanate (KARENZ AOI, a trade name, manufactured by SHOWA DENKO Co., Ltd.) was slowly added dropwise, and the resultant mixture was stirred for 4 hours. The formed product was separated by precipitation in isopropyl alcohol and dried. The amount of 2-acryloyloxyethyl isocyanate was 3.75 g for hydrogenated Polymer polyols A and B, 2.49 g for hydrogenated Polymer polyol C and 1.21 g for hydrogenated Polymer polyol D. Photocurable liquid resins A, B, C and D were obtained from Polymer polyols A, B, C and D, respectively, via hydrogenated Polymer polyols A, B, C and D, respectively, in accordance with the procedures described above.

Using Photocurable liquid resins A, B, C and D obtained above, six types of the photocurable compositions of Examples 1 to 5 and Comparative Example 1 were obtained by mixing the compositions using a planetary mixer in accordance with the formulations shown in Table 1. The obtained compositions were formed into films having the shape described in the methods of the measurement, and cured products were obtained by irradiation with an energy ray. As the source of the energy ray, a metal halide lamp was used, and the irradiation was conducted in an atmosphere of the air under the conditions of a luminance of about 160 mW/cm² (the wavelength: 320 to 390 nm) and an integrated amount of light of about 9,000 mJ/cm². The moisture permeability, the hardness and the heat resistance of the obtained cured products were evaluated in accordance with the methods described above. The results are shown in Table 1.

**Table 1**

| Example | | 1 | 2 | 3 | 4 | 5 |
|---|---|---|---|---|---|---|
| Comparative Example | 1 | | | | | |
| Polybutadiene modified with acrylic group at the end *1 | 70 | - | - | - | - | - |
| Photocurable liquid resin A *6 (Mw: 7,500; MWD: 1.25) | - | 70 | - | - | - | 60 |
| Photocurable liquid resin B *6 (Mw: 7,100; MWD: 1.25) | - | - | 70 | - | - | - |
| Photocurable liquid resin C *6 (Mw: 14,500; MWD: 1.20) | - | - | - | 70 | - | - |
| Photocurable liquid resin D *6 (Mw: 25,300; MWD: 1.86) | - | - | - | - | 70 | - |
| Isobornyl acrylate *2 | 30 | 30 | 30 | 30 | 30 | 40 |
| Photo-radical polymerization initiator 1 *3 | 1 | 1 | 1 | 1 | 1 | - |
| Photo-radical polymerization initiator 2 *4 | - | - | - | - | - | 1 |
| Silica *5 | - | - | - | - | - | 3 |
| Moisture permeability (g/m2.24 hr) | 17.8 | 3.4 | 3.4 | 3.4 | 3.4 | 3.4 |
| Hardness (°) | 58 | 52 | 48 | 41 | 28 | 48 |
| Heat resistance (decrease in tensile strength) (%) | 37 | 8 | 6 | 6 | 9 | 11 |

| | | | | | | |
|---|---|---|---|---|---|---|
| Notes *1: BAC-45 manufactured by OSAKA YUKIKAGAKU KOGYO Co., Ltd. (the weight-average molecular weight: 3,000; the molecular weight distribution: 2.12) *2: IBXA manufactured by OSAKA YUKIKAGAKU KOGYO Co., Ltd. *3: DAROCUR 1173 manufactured by CIBA SPECIALTY CHEMICALS Co., Ltd. (α-hydroxyacetophenone) *4: IRGACURE 369 manufactured by CIBA SPECIALTY CHEMICALS Co., Ltd. (α-aminoacetophenone) *5: AEROSIL 300 manufactured by NIPPON AEROSIL Co., Ltd. *6: Mw: the weight-average molecular weight MWD: the molecular weight distribution | | | | | | |

As clearly shown in Table 1, the photocurable liquid resin used in Comparative Example 1 had a great hardness and a poor heat resistance since the weight-average molecular weight was small and the molecular weight distribution was broad. In contrast, the photocurable liquid resins of the present invention in Example 1 to 5 had small hardnesses, exhibited excellent heat resistance and were materials which could be advantageously used as the sealing materials.

### INDUSTRIAL APPLICABILITY

The photocurable composition of the present invention can be advantageously used as the sealing material for various applications and, in particular, as the sealing material for electronic products, examples of which include gasket materials for electronic products such as HDD, sealing materials for ink tanks and sealing materials for liquid crystals.

## Claims

1. A method for producing a photocurable liquid resin which comprises:
(A) a step of producing a conjugated diene-based polymer or a conjugated diene/aromatic vinyl-based copolymer, which has a weight-average molecular weight of 5,000 to 40,000 and a molecular weight distribution of 3.0 or smaller, by polymerizing a conjugated diene-based monomer or a combination of a conjugated diene-based monomer and an aromatic vinyl-based monomer in a saturated hydrocarbon-based solvent using a dilithium initiator;
(B) a step of producing a conjugated diene-based polymer polyol or a conjugated diene/aromatic vinyl-based copolymer polyol by bringing the conjugated diene-based polymer or the conjugated diene/aromatic vinyl-based copolymer into reaction with an alkylene oxide;
(C) a step of producing a hydrogenated conjugated diene-based polymer polyol or a hydrogenated conjugated diene/aromatic vinyl-based copolymer polyol by hydrogenating the conjugated diene-based polymer polyol or the conjugated diene/aromatic vinyl-based copolymer polyol; and
(D) a step of bringing the hydrogenated conjugated diene-based polymer polyol or the hydrogenated conjugated diene/aromatic vinyl-based copolymer polyol into reaction with a compound having a photocurable unsaturated hydrocarbon group.

2. A method for producing a photocurable liquid resin according to Claim 1, wherein the conjugated diene-based monomer is 1,3-butadiene and/or isoprene.

3. A method for producing a photocurable liquid resin according to any one of Claims 1 and 2, wherein the aromatic vinyl-based monomer is styrene, a-methylstyrene and/or para-methylstyrene.

4. A method for producing a photocurable liquid resin according to any one of Claims 1 to 3, wherein the photocurable unsaturated hydrocarbon group is acryloyl group or methacryloyl group.

5. A photocurable liquid resin which is produced in accordance with a method described in any one of Claims 1 to 4.

6. A photocurable composition which comprises the photocurable liquid resin described in Claim 5 and has a JIS-A hardness of 55 or smaller.

7. A sealing material for electronic products obtained by curing the photocurable composition described in Claim 6.

8. A gasket material for electronic products obtained by curing the photocurable composition described in Claim 6.

## Patentansprüche

1. Verfahren zur Herstellung eines photoaushärtbaren flüssigen Harzes, das Folgendes umfasst:
(A) einen Schritt der Herstellens eines Polymers auf der Basis von konjugiertem Dien oder eines Copolymers auf der Basis von konjugiertem Dien/aromatischem Vinyl, das ein gewichtsdurchschnittliches Molekulargewicht von 5000 bis 40000 und eine Molekulargewichtsverteilung von 3,0 oder weniger aufweist, durch Polymerisieren eines Monomers auf der Basis von konjugiertem Dien oder einer Kombination eines Monomers auf der Basis von konjugiertem Dien und eines Monomers auf der Basis von aromatischem Vinyl in einem Lösungsmittel auf der Basis von gesättigtem Kohlenwasserstoff unter Anwendung eines Dilithiuminitiators;
(B) einen Schritt der Herstellens eines Polymerpolyols auf der Basis von konjugiertem Dien oder eines Copolymerpolyols auf der Basis von konjugiertem Dien/aromatischem Vinyl, durch Bringen des Polymers auf der Basis von konjugiertem Dien oder des Copolymers auf der Basis von konjugiertem Dien/aromatischem Vinyl zur Reaktion mit einem Alkylenoxid;
(C) einen Schritt der Herstellens eines hydrierten Polymerpolyols auf der Basis von konjugiertem Dien oder eines hydrierten Copolymerpolyols auf der Basis von konjugiertem Dien/aromatischem Vinyl durch Hydrieren des Polymerpolyols auf der Basis von konjugiertem Dien oder des Copolymerpolyols auf der Basis von konjugiertem Dien/aromatischen Vinyl; und
(D) einen Schritt des Bringens des hydrierten Polymerpolyols auf der Basis von konjugiertem Dien oder des hydrierten Copolymerpolyols auf der Basis von konjugiertem Dien/aromatischem Vinyl zur Reaktion mit einer Verbindung, die eine photoaushärtbare ungesättigte Kohlenwasserstoffgruppe aufweist.

2. Verfahren zur Herstellung eines photoaushärtbaren flüssigen Harzes nach Anspruch 1, wobei das Monomer auf der Basis von konjugiertem Monomer 1,3-Butadien und/oder Isopren ist.

3. Verfahren zur Herstellung eines photoaushärtbaren flüssigen Harzes nach einem der Ansprüche 1 und 2, wobei das Monomer auf der Basis von aromatischem Vinyl Styrol, α-Methylstyrol und/oder Para-Methylstyrol ist.

4. Verfahren zur Herstellung eines photoaushärtbaren flüssigen Harzes nach einem der Ansprüche 1 bis 3, wobei die photoaushärbare ungesättigte Kohlenwasserstoffgruppe eine Acryloylgruppe oder Methacryloylgruppe ist.

5. Photoaushärtbares flüssiges Harz, das einem in irgendeinem der Ansprüche 1 bis 4 beschriebenen Verfahren gemäß hergestellt wird.

6. Photoaushärtbare Zusammensetzung, die das in Anspruch 5 beschriebene photoaushärtbare flüssige Harz umfasst und eine JIS-A-Härte von 55 oder weniger aufweist.

7. Dichtstoff für elektronische Produkte, der durch Aushärten der in Anspruch 6 beschriebenen photoaushärtbaren Zusammensetzung erhalten wird.

8. Dichtungsmaterial für elektronische Produkte, das durch Aushärten der in Anspruch 6 beschriebenen photoaushärtbaren Zusammensetzung erhalten wird.

## Revendications

1. Procédé de production d'une résine liquide photodurcissable qui comprend :
(A) une étape de production d'un polymère à base de diène conjugué ou d'un copolymère à base de diène conjugué/vinyle aromatique, qui a un poids moléculaire moyen en poids de 5000 à 40000 et une distribution de poids moléculaires de 3,0 ou inférieure, par polymérisation d'un monomère à base de diène conjugué ou d'une combinaison d'un monomère à base de diène conjugué et d'un monomère à base de vinyle aromatique dans un solvant à base d'hydrocarbure saturé utilisant un initiateur de type dilithium ;
(B) une étape de production d'un polyol de polymère à base de diène conjugué ou d'un polyol de copolymère de diène conjugué/vinyle aromatique en pontant le polymère à base de diène conjugué ou le copolymère à base de diène conjugué/vinyle aromatique dans une réaction avec un oxyde d'alcylène ;
(C) une étape de production d'un polyol de polymère à base de diène conjugué hydrogéné ou d'un polyol de copolymère de diène conjugué hydrogéné/vinyle aromatique par hydrogénation du polyol de polymère à base de diène conjugué ou du polyol de copolymère de diène conjugué/vinyle aromatique ; et
(D) une étape de pontage du polyol de polymère à base de diène conjugué hydrogéné ou du polyol de copolymère de diène conjugué hydrogéné/vinyle aromatique dans une réaction avec un composé ayant un groupe hydrocarbure insaturé photodurcissable.

2. Procédé de production d'une résine liquide photodurcissable selon la revendication 1, dans lequel le monomère à base de diène conjugué est le 1,3-butadiène et/ou l'isoprène.

3. Procédé de production d'une résine liquide photodurcissable selon l'une quelconque des revendications 1 et 2, dans lequel le monomère à base de vinyle aromatique est le styrène, l'α-méthylstyrène et/ou le para-méthylstyrène.

4. Procédé de production d'une résine liquide photodurcissable selon l'une quelconque des revendications 1 à 3, dans lequel le groupe hydrocarbure insaturé photodurcissable est le groupe acryloyle ou le groupe méthacryloyle.

5. Résine liquide photodurcissable qui est produite conformément à un procédé décrit selon l'une quelconque des revendications 1 à 4.

6. Composition photodurcissable qui comprend la résine liquide photodurcissable décrite selon la revendication 5 et qui a une dureté JIS-A de 55 ou inférieure.

7. Matériau d'étanchéité pour les produits électroniques obtenus par durcissement de la composition photodurcissable décrite dans la revendication 6.

8. Matériau de joint d'étanchéité statique pour les produits électroniques obtenu par durcissement de la composition photodurcissable décrite dans la revendication 6.
